# EUROPÄISCHE PATENTANMELDUNG

(11) **EP 1 852 194 A2**
(43) Veröffentlichungstag der Anmeldung: **07.11.2007**
(21) Anmeldenummer: 07106901.7
(22) Anmeldetag: 25.04.2007
(51) Int. Cl.: B08B 9/055, F16L 55/46

(54) **Vorrichtung zur Einführung von Reinigungskörpern in eine Förderleitung**

(30) Priorität: 03.05.2006 DE 102006020776
(71) Anmelder: PUTZMEISTER Aktiengesellschaft, 72631 Aichtal (DE)
(72) Erfinder: MÄCKLE, Raimund, 73730, Esslingen (DE)
(74) Vertreter: Wolf, Eckhard

(57) **Zusammenfassung**

Die Erfindung betrifft eine Vorrichtung zur Einführung von Reinigungskörpern (20,22) in eine Förderleitung für Dickstoffe, insbesondere für Schlämme. Die Vorrichtung umfasst eine Rohrschleuse (10), die ein Gehäuse (12) und einen in diesem verschiebbar angeordneten Schieber (14) aufweist. Das Gehäuse (12) ist über einen Eingangsstutzen (26) und einen vorzugsweise mit diesem fluchtenden Ausgangsstutzen (30) an die Förderleitung (28) anschließbar. Außerdem ist das Gehäuse mit einem gegenüber den Ein- und Ausgangsstutzen seitlich versetzt angeordneten Einführstutzen (32) an ein mit den Reinigungskörpern (20,22) bestückbares Magazin angeschlossen, wobei der Schieber (14) mit einer Durchgangskammer (34) und mindestens einer gegenüber dieser versetzt angeordneten Sperrzone (36',36") mittels einer Steuereinrichtung wahlweise zwischen den Ein- und Ausgangsstutzen (26,30) oder hinter dem Einführstutzen (32) positionierbar ist. Erfindungsgemäß wird vorgeschlagen, dass das Magazin mindestens einen von oben in eine mit dem Einführstutzen (32) kommunizierende Vorkammer (38) mündenden Magazinbehälter (16,18) zur Aufnahme von mehreren Reinigungskörpern (20,22) sowie ein über die Steuerungseinrichtung ansteuerbares, durch die Vorkammer (38) hindurch unter Mitnahme eines dort befindlichen Reinigungskörpers (20,22) über den Einführstutzen (32) in die Durchgangskammer (34) verschiebbares Einführorgan (46) aufweist. Eine bevorzugte Ausgestaltung der Erfindung sieht vor, dass zwei in die Vorkammer mündende, getrennt ansteuerbare Magazinbehälter (16,18) vorgesehen sind, die zur Aufnahme von in Größe und/oder Form unterschiedlichen Reinigungskörpern (20,22) bestimmt sind.

## Beschreibung

Die Erfindung betrifft eine Vorrichtung zur Einführung Reinigungskörpern in eine Förderleitung für Dickstoffe, insbesondere für Schlämme, mit einer ein Gehäuse und einen in diesem verschiebbar angeordneten Schieber aufweisenden Rohrschleuse, wobei das Gehäuse über einen Eingangsstutzen und einen vorzugsweise mit diesem fluchtenden Ausgangsstutzen an die Förderleitung anschließbar ist, und mit einem gegenüber dem Ein- und Ausgangsstutzen vorzugsweise seitlich versetzt angeordneten Einführstutzen, an den ein mit Reinigungskörpern bestückbares Magazin angeschlossen ist, und wobei der Schieber mit einer Durchgangskammer und mindestens einer gegenüber dieser versetzt angeordneten Sperrzone mittels einer Steuereinrichtung wahlweise zwischen dem Ein- und Ausgangsstutzen oder hinter dem Einführstutzen positionierbar ist.

Bei bekannten Rohrschleusen dieser Art wird beim Reinigungsvorgang jeweils der unterste im Molchmagazin angeordnete Reinigungskörper über den Einführstutzen in die Durchgangskammer des Schiebers eingeführt und mit dem Schieber zur Einschleusstelle zwischen den Ein- und Ausgangsstutzen verschoben. Von dort aus wird der Reinigungskörper unter der Einwirkung eines über den Eingangsstutzen zugeführten Druckmittels durch die an den Ausgangsstutzen angeschlossene Förderleitung hindurch gepresst. Dabei wird die Förderleitung in ihrem Inneren von dem vorzugsweise balligen, elastisch verformbaren Reinigungskörper gereinigt. Üblicherweise werden in den Reinigungsvorrichtungen dieser Art stets gleich große und gleich ausgebildeten Reinigungskörper verwendet.

Ausgehend hiervon liegt der Erfindung die Aufgabe zugrunde, eine Reinigungsvorrichtung der eingangs angegebenen Art zu entwickeln, mit der Reinigungskörper unterschiedlicher Größe und Geometrie in die Förderleitung eingetragen werden können.

Zur Lösung dieser Aufgabe werden die im Patentanspruch 1 angegebenen Merkmale vorgeschlagen. Vorteilhafte Ausgestaltungen und Weiterbildungen der Erfindung ergeben sich aus den abhängigen Ansprüchen.

Die erfindungsgemäße Lösung besteht im Wesentlichen darin, dass das Magazin mindestens einen von oben in eine mit dem Einführstutzen kommunizierende Vorkammer mündenden Magazinbehälter zur Aufnahme von mehreren Reinigungskörpern sowie ein über die Steuerungseinrichtung ansteuerbares, durch die Vorkammer hindurch unter Mitnahme eines dort befindlichen Reinigungskörpers über die Einführstutzen in die Durchgangskammer verschiebbares Einführorgan aufweist. Die Reinigungskörper sind in dem mindestens einen rohrförmig ausgebildeten Magazinbehälter zweckmäßig übereinander angeordnet und liegen unter Bildung einer Reinigungskörpersäule gegeneinander an. Die Verwendung der erfindungsgemäßen Vorkammer in Verbindung mit dem Einführorgan erlaubt es, unterschiedlich große und verschieden gestaltete Reinigungskörper in der Durchgangskammer der Rohrschleuse zu platzieren und von dort aus in die Förderleitung einzuschleusen.

Eine bevorzugte Ausgestaltung der Erfindung sieht vor, dass an dem mindestens einen Magazinbehälter ein Sperrorgan angeordnet ist, das über die Steuerungseinrichtung wahlweise in seiner Sperrstellung den Durchtritt des untersten, im Magazinbehälter befindlichen Reinigungskörpers in die Vorkammer versperrt und in seiner Offenstellung freigibt. Damit ist sichergestellt, dass immer nur ein Reinigungskörper von dem mindestens einen Magazinbehälter zur Vorkammer gelangt und beim Einführvorgang gegen ein Nachrücken aus dem mindestens einen Magazin gesperrt ist bis die Steuerungseinrichtung das Sperrorgan freigibt. Zweckmäßig ist dementsprechend das Einführorgan über die Steuerungseinrichtung auslösbar, wenn sich das Sperrorgan in seiner Sperrstellung und die Durchgangskammer des Schiebers hinter dem Einführstutzen befindet. Eine weitere Verbesserung in dieser Hinsicht wird dadurch erzielt, dass an mindestens einem Magazinbehälter zusätzlich ein Halteorgan angeordnet ist, das über die Steuerungseinrichtung wahlweise in seiner Haltestellung ein Nachrücken des zweituntersten im Magazinbehälter befindlichen Reinigungskörpers in die unterste Position des Magazinbehälters versperrt oder in seiner Offenstellung freigibt. Damit wird erreicht, dass auch bei Verwendung kleiner Reinigungskörper immer nur ein Reinigungskörper von der untersten Position aus in die Vorkammer gelangen kann, ohne dass zunächst die darüber befindliche Reinigungskörpersäule nachrücken kann. Letzteres ist erst dann der Fall, wenn über die Steuerungseinrichtung das Halteorgan freigegeben wird. Dementsprechend ist es von Vorteil, dass das Halteorgan sich in seiner Haltestellung befindet, wenn das Sperrorgan geöffnet ist und dass das Sperrorgan sich in seiner Sperrstellung befindet, wenn das Halteorgan geöffnet ist.

Eine bevorzugte bauliche Ausgestaltung der Erfindung sieht vor, dass das Sperrorgan, das Halteorgan und/oder das Einführorgan über einen Pneumatik- oder Hydrozylinder betätigbar sind.

Eine besonders vorteilhafte Ausgestaltung der Erfindung sieht vor, dass zwei in die Vorkammer mündende, getrennt ansteuerbare Magazinbehälter vorhanden sind, wobei beide Magazinbehälter ein Sperrorgan aufweisen und mindestens einer zusätzlich ein Halteorgan aufweist. Die beiden Magazinbehälter sind zur Aufnahme von in Größe und/oder Form unterschiedlichen Reinigungskörpern ausgebildet und bestimmt. So können beispielsweise im einen Magazinbehälter kugelförmige und im anderen zylinderförmige Reinigungskörper aufgenommen werden.

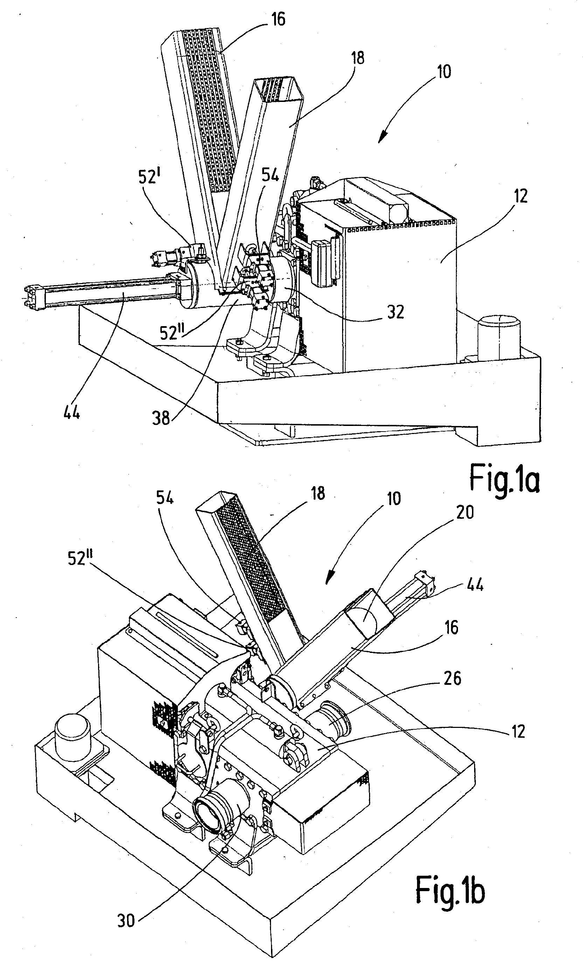

Im Folgenden wird die Erfindung anhand des in der Zeichnung in schematischer Weise dargestellten Ausführungsbeispiels näher erläutert. Es zeigen
- Fig. 1: eine Rohrschleuse zum Einführen von Reinigungskörpern in eine Betonförderleitung mit zwei Magazinbehältern in zwei von verschiedenen Seiten aus gesehenen schaubildlichen Darstellungen;
- Fig. 2a: bis e einen im Wesentlichen vertikalen Schnitt durch die Rohrschleuse und einen der Magazinbehälter in verschiedenen Schleusenstellungen;
- Fig. 3a: bis e einen horizontalen Schnitt durch die Rohrschleuse auf der Höhe der Ein- und Ausgangsstutzen und des Einführstutzens in den Schleusenstellungen der Fig. 2a bis e;
- Fig. 4a: bis e einen senkrechten Schnitt durch die beiden Magazinbehälter in verschiedenen Stellungen der Sperr- und Halteorgane.

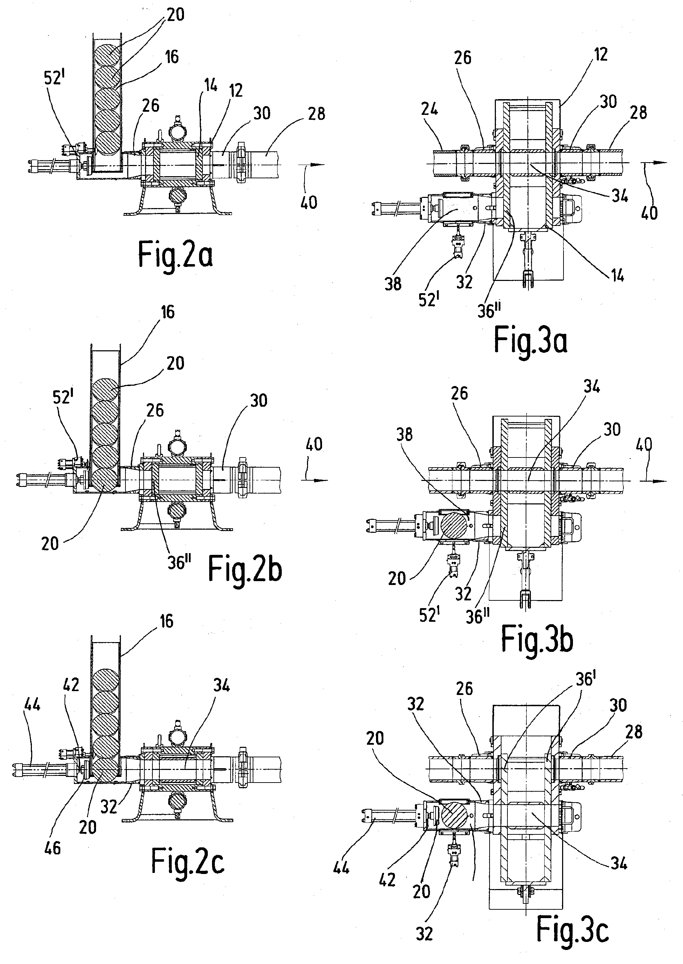

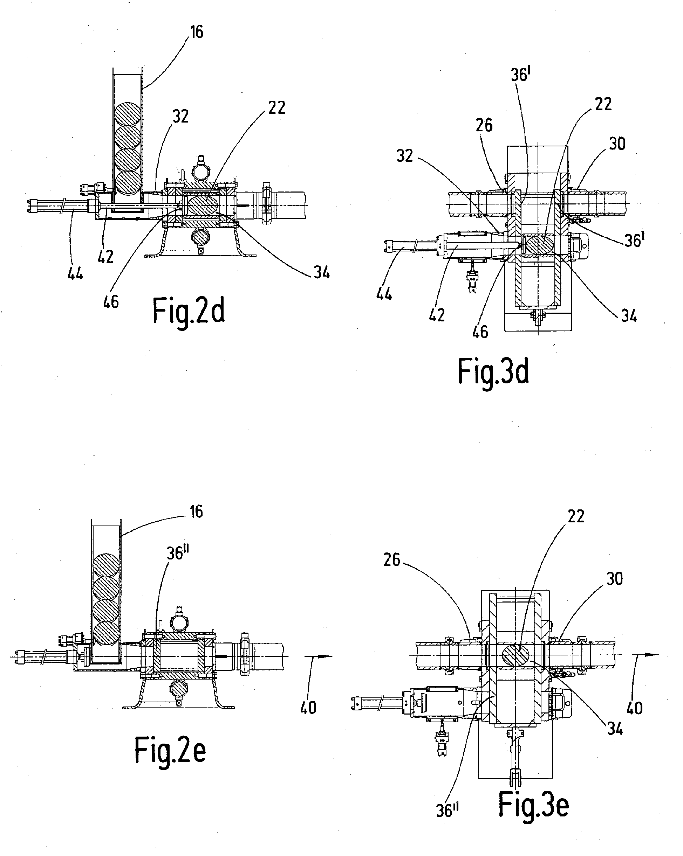

Die in der Zeichnung dargestellte Rohrschleuse ist Bestandteil einer Vorrichtung zum Einführen von Reinigungskörpern in eine Förderleitung für Dickstoffe, insbesondere für Schlämme. Die Rohrschleuse 10 besteht im Wesentlichen aus einem Gehäuse 12 und einem in dem Gehäuse unter der Einwirkung eines Hydrozylinders verschiebbar angeordneten Schiebers 14 sowie zwei rohrförmigen Magazinbehältern 16,18 zur Aufnahme von Reinigungskörpern 20,22 unterschiedlicher Größe und Gestalt. An dem Gehäuse 12 sind ein an die Druckleitung 24 einer Förderpumpe anschließbarer Eingangsstutzen 26, ein an eine Förderleitung 28 anschließbarer Ausgangsstutzen 30 sowie ein Eingangsstutzen 32 für die in die Förderleitung 28 einzuschleusenden Reinigungskörper 20,22 angeordnet, während der Schieber 14 mit einer Durchgangskammer 34 über den Hydraulikzylinder und eine nicht dargestellte Steuerungseinrichtung wahlweise in eine nicht dargestellte Steuerungseinrichtung wahlweise in eine Durchgangsposition zwischen dem Ein- und Ausgangsstutzen 26,30 (Fig. 3a, b und e) und hinter dem Einführstutzen 32 (Fig. 3c und d) positionierbar ist. In der mit dem Ein- und Ausgangsstutzen ausgefluchteten Lage der Durchgangskammer 34 wird ein Druckmittel (z.B. Flüssigbeton) vom Eingangsstutzen in Richtung des Pfeils 40 durch die Förderleitung 28 transportiert. Gleichzeitig ist der Einführstutzen 34 innerhalb des Gehäuses durch die Sperrzone 36" des Schiebers verschlossen. In der Schieberposition gemäß Fig. 3c und d ist die Durchgangskammer 34 mit dem Einführstutzen 32 ausgefluchtet, so dass ein in der Vorkammer 38 angeordneter Reinigungskörper 20,22 über ein an der Kolbenstange 42 eines Hydrozylinders 44 angeordnetes Einführorgan 46 in die Vorkammer 38 verschoben werden kann (Fig. 2d und 3d). In dieser Schieberstellung sind die Ein- und Ausgangsstutzen 26,30 von der Sperrzone 36' des Schiebers gegen Materialdurchtritt verschlossen. Anschließend kann der in der Durchgangskammer befindliche Reinigungskörper 20,22 in die Förderleitung 24 eingeschleust werden, indem der Schieber 14 mit seiner Durchgangskammer 34 wieder in die mit den Ein- und Ausgangsstutzen 26,30 fluchtende Lage verschoben (Fig. 3e) und über den Eingangsstutzen 26 mit Druckmittel beaufschlagt wird.

Eine Besonderheit der Erfindung besteht darin, dass zwei Magazinbehälter 16,18, vorgesehen sind, die mit ihrer unteren, austrittsseitigen Öffnung 48,50 gemeinsam in die Vorkammer 38 münden und in der Seitenansicht V-förmig gegeneinander abgewinkelt sind. Die Reinigungskörper 20 im Magazinbehälter 16 sind kugelförmig ausgebildet, während die Reinigungskörper 22 im Magazinbehälter 18 zylindrisch mit etwas kleinerem Durchmesser ausgebildet sind. Um sicherzustellen, dass die Reinigungskörper 20,22 gezielt aus den Magazinbehältern 18,20 in die Vorkammer und von dort über die Rohrschleuse 10 in die Förderleitung 28 eingebracht werden können, befindet sich in der Nähe der unteren Öffnung 48,50 eines jeden Magazinbehälters 16,18 ein hydraulisch betätigbares Sperrorgan 52',52", das dafür sorgt, dass die Reinigungskörpersäulen in den Magazinbehältern 16,18 oberhalb der Vorkammer 38 angehalten werden können. Der unterste Reinigungskörper 20,22 eines jeden Magazinbehälters 18,20 gleitet somit erst dann in die Vorkammer 28, wenn das zugehörige Sperrorgan 52',52" geöffnet wird. Im Falle des Magazinbehälters 16 gleitet beim Öffnen des Sperrorgans 52' auch die darüber befindliche Reinigungskörpersäule nach. Das Sperrorgan 52' ist so oberhalb der Vorkammer 38 positioniert, dass es am zweitletzten Reinigungskörper 20 anschlägt, und den letzten in der Vorkammer 38 befindlichen Reinigungskörper für das anschließende Herausschieben aus der Vorkammer 38 freigibt.

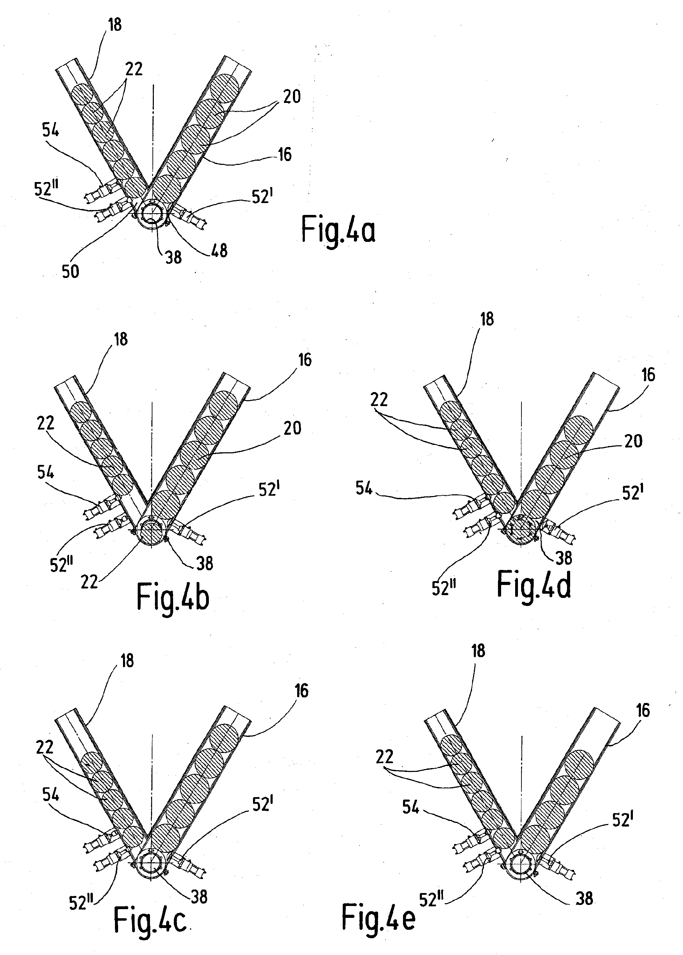

Im Bereich des zweiten Magazinbehälters 18 ist zusätzlich ein Halteorgan 54 vorgesehen, das oberhalb des Sperrorgans 52" gegen den jeweils zweituntersten Reinigungskörper 22 unter Festhalten der darüber befindlichen Reinigungskörpersäule anschlagbar ist. Wie insbesondere aus den Fig. 4a bis c zu ersehen ist, wird zum Einschleusen des untersten Reinigungskörpers 22 aus dem Magazin 18 in die Vorkammer 38 zunächst das Sperrorgan 52" geöffnet, während das Halteorgan 54 in seiner Haltestellung verbleibt. Dadurch fällt der unterste Reinigungskörper 22 in die Vorkammer 38, während die darüber befindliche Reinigungskörpersäule vom Halteorgan 54 festgehalten wird. Erst wenn der Reinigungskörper 22 mit Hilfe des Einführorgans 46 aus der Vorkammer in die Durchgangskammer herausgeschoben und das Sperrorgan 52" wieder in seine Schließstellung gebracht ist, kann das Halteorgan 54 zeitweilig geöffnet werden, damit die Reinigungskörpersäule um einen Schritt nach unten nachrücken kann (Fig. 4c). Sobald dieser Vorgang abgeschlossen ist, wird auch das Halteorgan 54 wieder über die Steuerungseinrichtung in seine Schließstellung gemäß Fig. 4a gebracht. Die Verwendung des zusätzlichen Halteorgans 54 ist beim gezeigten Ausführungsbeispiel notwendig, weil die zylindrischen Reinigungskörper 22 einen kleineren Durchmesser als die kugeligen Reinigungskörper 20 aufweisen und der Ausschub eines Reinigungskörpers 22 aus der Vorkammer bei nachgerückter Reinigungskörpersäule wie im Falle der Reinigungskörper 20 nicht störungsfrei möglich wäre.

Zusammenfassend ist folgendes festzuhalten: Die Erfindung betrifft eine Vorrichtung zur Einführung von Reinigungskörpern 20,22 in eine Förderleitung für Dickstoffe, insbesondere für Schlämme. Die Vorrichtung umfasst eine Rohrschleuse 10, die ein Gehäuse 12 und einen in diesem verschiebbar angeordneten Schieber 14 aufweist. Das Gehäuse 12 ist über einen Eingangsstutzen 26 und einen vorzugsweise mit diesem fluchtenden Ausgangsstutzen 30 an die Förderleitung 28 anschließbar. Außerdem ist das Gehäuse mit einem gegenüber den Ein- und Ausgangsstutzen seitlich versetzt angeordneten Einführstutzen 32 an ein mit den Reinigungskörpern 20,22 bestückbares Magazin angeschlossen, wobei der Schieber 14 mit einer Durchgangskammer 34 und mindestens einer gegenüber dieser versetzt angeordneten Sperrzone 36',36" mittels einer Steuereinrichtung wahlweise zwischen den Ein- und Ausgangsstutzen 26,30 oder hinter dem Einführstutzen 32 positionierbar ist. Erfindungsgemäß wird vorgeschlagen, dass das Magazin mindestens einen von oben in eine mit dem Einführstutzen 32 kommunizierende Vorkammer 38 mündenden Magazinbehälter 16,18 zur Aufnahme von mehreren Reinigungskörpern 20,22 sowie ein über die Steuerungseinrichtung ansteuerbares, durch die Vorkammer 38 hindurch unter Mitnahme eines dort befindlichen Reinigungskörpers 20,22 über den Einführstutzen 32 in die Durchgangskammer 34 verschiebbares Einführorgan 46 aufweist. Eine bevorzugte Ausgestaltung der Erfindung sieht vor, dass zwei in die Vorkammer mündende, getrennt ansteuerbare Magazinbehälter 16,18 vorgesehen sind, die zur Aufnahme von in Größe und/oder Form unterschiedlichen Reinigungskörpern 20,22 bestimmt sind.

## Patentansprüche

1. Vorrichtung zur Einführung von Reinigungskörpern (20,22) in eine Förderleitung (28) für Dickstoffe, insbesondere für Schlämme, mit einer ein Gehäuse (12) und einen in diesem verschiebbar angeordneten Schieber (14) aufweisenden Rohrschleuse (10), wobei das Gehäuse (12) über einen Eingangsstutzen (26) und einen vorzugsweise mit diesem fluchtenden Ausgangsstutzen (30) an die Förderleitung (28) anschließbar ist, und mit einem gegenüber den Ein- und Ausgangsstutzen (26,30) vorzugsweise seitlich versetzt angeordneten Einführstutzen (32), an den ein mit Reinigungskörpern (20,22) bestückbares Magazin angeschlossen ist, und wobei der Schieber (14) mit einer Durchgangskammer (34) und mindestens einer gegenüber dieser versetzt angeordneten Sperrzone (36',36") mittels einer Steuereinrichtung wahlweise zwischen den Ein- und Ausgangsstutzen (26,30) oder hinter dem Einführstutzen (32) positionierbar ist, **dadurch gekennzeichnet, dass** das Magazin mindestens einen von oben in eine mit dem Einführstutzen (32) kommunizierende Vorkammer (38) mündenden Magazinbehälter (16,18) zur Aufnahme von mehreren Reinigungskörpern (20,22) sowie ein über die Steuerungseinrichtung ansteuerbares, durch die Vorkammer (38) hindurch unter Mitnahme eines dort befindlichen Reinigungskörpers (20,22) über den Einführstutzen (32) in die Durchgangskammer (34) verschiebbares Einführorgan (46) aufweist.

2. Vorrichtung nach Anspruch 1, **dadurch gekennzeichnet, dass** die Reinigungskörper (20,22) in dem mindestens einen rohrförmig ausgebildeten Magazinbehälter (16,18) übereinander angeordnet sind und unter Bildung einer Reinigungskörpersäule gegeneinander anliegen.

3. Vorrichtung nach Anspruch 1 oder 2, **dadurch gekennzeichnet, dass** an dem mindestens einen Magazinbehälter (16,18) ein Sperrorgan (52',52") angeordnet ist, das über die Steuerungseinrichtung wahlweise in seiner Sperrstellung den Durchtritt des untersten im Magazinbehälter (16,18) befindlichen Reinigungskörpers (20,22) in die Vorkammer (38) versperrt oder in seiner Offenstellung freigibt.

4. Vorrichtung nach Anspruch 3, **dadurch gekennzeichnet, dass** das Einführorgan (46) über die Steuerungseinrichtung auslösbar ist, wenn sich das Sperrorgan (52',52") in seiner Sperrstellung und die Durchgangskammer (34) des Schiebers (14) hinter dem Einführstutzen (32) befinden.

5. Vorrichtung nach Anspruch 3 oder 4, **dadurch gekennzeichnet, dass** an mindestens einem Magazinbehälter (18) zusätzlich ein Halteorgan (54) angeordnet ist, das über die Steuerungseinrichtung wahlweise in seiner Haltestellung ein Nachrücken des zweituntersten im Magazinbehälter (18) befindlichen Reinigungskörpers (22) in die unterste Position des Magazinbehälters (18) versperrt oder in seiner Offenstellung freigibt.

6. Vorrichtung nach Anspruch 5, **dadurch gekennzeichnet, dass** das Halteorgan (54) sich in seiner Haltestellung befindet, wenn das Sperrorgan (52") geöffnet ist, und dass das Sperrorgan (52") sich in seiner Sperrstellung befindet, wenn das Halteorgan (54) geöffnet ist.

7. Vorrichtung nach Anspruch 5 oder 6, **dadurch gekennzeichnet, dass** das Sperrorgan (52',52"), das Halteorgan (54) und/oder das Einführorgan (46) über einen Pneumatik- oder Hydrozylinder betätigbar sind.

8. Vorrichtung nach einem der Ansprüche 1 bis 7, **dadurch gekennzeichnet, dass** zwei in die Vorkammer (38) mündende, getrennt ansteuerbare Magazinbehälter (16,18) vorhanden sind.

9. Vorrichtung nach Anspruch 8, **dadurch gekennzeichnet, dass** beide Magazinbehälter (16,18) ein Sperrorgan (52',52") aufweisen und mindestens einer zusätzlich ein Halteorgan (54) aufweist.

10. Vorrichtung nach Anspruch 8 oder 9, **dadurch gekennzeichnet, dass** die Magazinbehälter (16,18) zur Aufnahme von in Größe und/oder Form unterschiedlichen Reinigungskörpern (20,22) bestimmt sind.
